# EUROPÄISCHE PATENTSCHRIFT

(11) **EP 2 495 068 B1**
(45) Veröffentlichungstag und Bekanntmachung des Hinweises auf die Patenterteilung: **15.11.2017**
(21) Anmeldenummer: 12150949.1
(22) Anmeldetag: 12.01.2012
(51) Int. Cl.: B23K 37/00, B23K 26/26

(54) **Vorrichtung und Verfahren zur Kühlung eines erhitzten Materialstranges**
Method and device for cooling a heated strand of material
Dispositif et procédé de refroidissement d'un tronçon de matière chauffé

(30) Priorität: 01.03.2011 DE 202011003380 U
(43) Veröffentlichungstag der Anmeldung: 05.09.2012
(73) Patentinhaber: Deggendorfer Werkstätten e.V., 94469 Deggendorf (DE)
(72) Erfinder: Jäger, Thomas, 94227 Lindberg (DE); Maceiczyk, Richard, 94469 Deggendorf (DE)
(74) Vertreter: Benninger, Johannes

(56) Entgegenhaltungen:
- EP-A1- 0 027 787
- WO-A1-2007/052072

## Beschreibung

Die vorliegende Erfindung betrifft eine Vorrichtung zur Kühlung eines erhitzten Materialstranges mit den Merkmalen des unabhängigen Anspruchs 1. Die Erfindung betrifft weiterhin ein Verfahren zur Kühlung eines erhitzten Materialstranges mit den Merkmalen des unabhängigen Verfahrensanspruchs.

Bei der Verarbeitung von länglichen Metallstücken werden häufig Verfahren zur seriellen Behandlung von Endlosmaterial eingesetzt, bei denen das Material anschließend auf Rollen gewickelt oder ggf. erst nach seiner Behandlung in die erforderlichen Längenabschnitte unterteilt wird. So kann bspw. Bandmaterial aus Metall, das bei einer Fügebehandlung wie einem Längsschweißverfahren, einem Laserschweißverfahren o. dgl. einer starken Wärmeeinwirkung unterzogen wird, während oder nach dem Fügeverfahren in geeigneter Weise gekühlt werden, um weitere Verarbeitungsschritte zu ermöglichen und/oder um Wärmeverzug-Effekte zu reduzieren.

Die US 2 862 294 A offenbart eine Vorrichtung mit einem Schweißbrenner zum Formen einer Schweißnaht zwischen einem Metallstreifen und einer Leiste. Zur Kühlung der Schweißnaht ist eine Kapillare vorhanden, durch welche kühlendes Kohlenstoffdioxid an die Schweißnaht abgegeben wird. Bei dieser bekannten Vorrichtung erfolgt die Kühlung über die Kapillare in einem definierten Bereich des zu kühlenden Materials. Ein erhitzter Materialstrang unterliegt während der Erwärmung einer Materialdehnung. Soll der Materialstrang nach der Erwärmung einer weiteren Bearbeitung, beispielsweise einer Schneidstation, zugeführt werden, so kann es nötig sein, dass der Materialstrang eine feste bzw. bestimmte Länge aufweist. Um dies zu gewährleisten, muss die Materialdehnung des Materialstrangs abgebaut werden. Eine umfassende Kühlung des gesamten Materialstrangs ist hierbei nötig.

Aus der EP 0 027 787 A1 ist ein Verfahren zur Gewinnung von Wärme im Stranggiessverfahren gegossener Brammen offenbart. Die mit einem Rollgang zur Kühlkammer geförderten Brammen sind vom Gußstrang in Stücke vorgegebener Länge unterteilt. Weiter werden die Brammen mit Wasser besprüht, welches aus mit Sprühdüsen ausgestatteten Wasserzuführungsleitungen austritt. Der hierdurch entstehende Dampf wird mittels einer Dampfabsaugungsleitung und eines Gebläses abgesaugt. Das Dampf-Luft-Gemisch wird über die Absaugungsleitung einem Wärmetauscher zugeführt, in dem der Dampf kondensiert. Die hierbei mittels des Wärmetauschers gewonnene Wärmeenergie soll für weitere Prozesse verwendet werden.

Die WO 95/23669 A offenbart eine Vorrichtung und ein Verfahren zum Verbindungsschweißen von metallischen Werkstücken mit definierten Wanddicken. Während des Schweißvorganges werden die metallischen Werkstücke zur Erzeugung eines Temperaturgradienten über der Wanddicke mit Flüssiggas wie flüssigem Kohlendioxid gekühlt. Dadurch sollen Zugspannungen an der Oberfläche der Werkstücke und damit die Gefahren von Spannungsrisskorrosionen reduziert werden.

Ein weiteres Verfahren zur Kühlung von verschweißten Werkstücken mittels einer Beaufschlagung der Werkstücke mit Partikeln aus gefrorenem Kohlendioxid ist aus der WO 2007/052072 A1 bekannt.

Alle bekannten Verfahren eignen sich zwar grundsätzlich zur Kühlung von miteinander zu verschweißenden Werkstücken, haben jedoch allesamt einen relativ hohen Kühlmittelverbrauch, sofern eine starke Kühlung erzielt werden soll. Das Kühlmittel wird als reines Verbrauchsmaterial an die Umgebung der Werkzone abgegeben.

Ein vorrangiges Ziel der vorliegenden Erfindung wird darin gesehen, ein effizienteres und effektiveres Kühlen für wärmebeaufschlagte Materialstränge oder - abschnitte zu ermöglichen, wobei nach Möglichkeit der Kühlmittelverbrauch reduziert werden kann.

Als weitere Ziele können genannt werden, eine Vorrichtung und ein Verfahren zur Verfügung zu stellen, welche die Kühlung eines gesamten Materialstrangs ermöglichen. Zudem soll die Vorrichtung auf einfache und unkomplizierte Weise hergestellt und das Verfahren auf einfache Weise durchgeführt werden können. Die Herstellung einer derartigen Vorrichtung mit geringen Kosten sowie die Durchführung des erfindungsgemäßen Verfahrens sind weitere Aspekte der Erfindung. Zudem soll die Vorrichtung und soll das Verfahren eine zeitoptimierte Kühlung eines Materialstrangs gewährleisten.

Zumindest das zuerst genannte vorrangige Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen. Zur Erreichung des genannten Ziels der Erfindung wird eine Vorrichtung zur Kühlung eines erhitzten Materialstanges mit den Merkmalen des unabhängigen Anspruchs 1 vorgeschlagen. Ein solcher Materialstrang kann bspw. durch ein Füge- oder Schweißverfahren erhitzt worden sein. Soll der Materialstrang nach dem Schweißverfahren weiterbearbeitet werden, so kann die aus der Temperaturzufuhr des Schweißvorgangs erfolgte Materialdehnung des Materialstranges durch eine Kühlung mittels der erfindungsgemäßen Vorrichtung abgebaut werden. Zu diesem Zweck umfasst die erfindungsgemäße Vorrichtung einen abgegrenzten Raum, der über wenigstens eine Zugangsöffnung zur Zuführung des zu kühlenden erhitzten Materialstrangs und/oder zu dessen Entnahme nach einem Kühlvorgang sowie über wenigstens eine Einleitungsstelle oder -mündung zur Zuführung und/oder Einbringung eines zu kühlenden Mediums in den abgegrenzten Raum aufweist. Nach Passieren des abgegrenzten Raumes kann der Materialstrang einer weiteren Bearbeitungsstation wie bspw. einer Schneideinrichtung zugeführt werden. Der Materialstrang kann bspw. als Hohlprofil oder als sonstiges Profil ausgebildet sein. Wahlweise kann der Materialstrang Wandungen mit runder und/oder eckiger Formgebung aufweisen und somit beispielsweise als Rohr und/oder als Mehrkantprofil ausgebildet sein.

Der abgegrenzte Raum im Sinne der Erfindung ist durch eine Einhausung, ein Gehäuse, eine isolierende Kammer, ein Kühlraum o. dgl. gebildet. Dieser abgegrenzte Raum bzw. die Einhausung o. dgl. ist zumindest teilweise geschlossen. Der abgegrenzte Raum oder die Einhausung kann bspw. aus Kunststoff ausgebildet sein und somit im Spritzgussverfahren gefertigt werden. Hierbei kann das Material mit einem oder mehreren Additiven versehen sein. Auch kann die Einhausung durch eine Konstruktion aus Metall oder durch eine Konstruktion auf der Grundlage weiterer Materialien gebildet sein. Zudem weist die Einhausung zumindest eine Zugangsöffnung oder einen Eingang auf. Der Eingang kann beispielsweise als Durchbruch ausgebildet sein und muss hinsichtlich seiner Dimensionierung derart beschaffen sein, dass der Materialstrang über den Eingang in die mindestens eine Einhausung bewegbar ist. Wahlweise kann der Materialstrang nach der kühlenden Behandlung im abgegrenzten Raum oder in der Einhausung wieder durch die Zugangsöffnung entfernt oder entnommen werden. Alternativ kann neben der Zugangsöffnung auch eine Ausgangsöffnung vorgesehen sein, um den Materialstrang in kontinuierlicher Förderung durch die Einhausung oder den abgegrenzten Kühlraum hindurch transportieren zu können.

Wahlweise kann die Bewegung des Materialstrangs durch die Einhausung oder durch den Kühlraum hindurch durch einen Benutzer vorgenommen werden. In einer bevorzugten Ausführungsform der vorliegenden Erfindung erfolgt die Bewegung des Materialstrangs maschinell, beispielsweise durch geeignete Fördermittel. Die Bewegung kann derart definiert sein, dass der Materialstrang in die Einhausung bewegt wird und nach Kühlung in entgegengesetzter Richtung aus der Einhausung herausbewegt wird. In einer bevorzugten Ausführungsform der vorliegenden Erfindung verfügt die Einhausung jedoch über einen Eingang und über einen Ausgang. Der Materialstrang wird hierbei zur Kühlung vom Eingang über den Ausgang durch die mindestens eine Einhausung bewegt.

Weiterhin weist der abgegrenzte Raum oder Kühlraum bzw. die mindestens eine Einhausung wenigstens eine Öffnung und/oder mindestens einen Durchbruch zur Einbringung eines zu kühlenden Mediums auf. Die mindestens eine Öffnung und/oder der mindestens eine Durchbruch können bspw. auf der Oberseite der Einhausung oder des Kühlraumes angeordnet sein. Gemäß einer weiteren Ausführungsvariante kann die wenigstens eine Einleitungsstelle für das kühlende Medium durch eine oder mehrere Düsen an einem Wandbereich und/oder im Innenraum des abgegrenzten Raumes und/oder in Nähe einer Bearbeitungsstelle für den Materialstrang gebildet sein. Wahlweise können die Einleitungsstellen oder Düsen nebeneinander und parallel zu einer Bewegungsrichtung des Materialstrangs angeordnet sein. Wahlweise kann anstelle von einzelnen, in Reihe angeordneten Düsen auch eine Spaltdüse mit länglicher Austrittsöffnung für das Kühlmedium zum Einsatz kommen. Eine alternative Ausführungsvariante kann auch vorsehen, dass andere Düsenbauformen verwendet werden, bspw. Ringdüsen oder versetzt über den Umfang verteilt angeordnete Einzeldüsen o. dgl. Bei der Kühlung von Rundrohren, die den zu kühlenden Materialstrang bilden, kann es bspw. sinnvoll sein, diese Rohre allseitig gleichmäßig mit Kühlmittel beaufschlagen zu können, um auf diese Weise eine gleichmäßige Abkühlung zu erreichen. Für diese Zwecke ist der Einsatz von Ringdüsen o.ä. ggf. besser geeignet als linear entlang der Förderrichtung des Materialstranges angeordnete Einzeldüsen.

Das zu kühlende Medium ist durch verflüssigtes und/oder gasförmiges Kohlendioxid gebildet. Das flüssige und/oder gasförmige Kohlendioxid erfährt nach dem Einbringen in die Einhausung eine Änderung seines Aggregatszustandes und ist vorzugsweise als sog. Trockeneis ausgebildet. Der Materialstrang kann während seiner Kühlung permanent mit dem Trockeneis in Oberflächenkontakt gebracht, bspw. besprüht werden. Die ausreichende Versorgung der Einhausung mit Trockeneis zur Kühlung wird durch erneutes und ggf. definiertes Einbringen von flüssigem und/oder gasförmigem Kohlendioxid in die Einhausung oder den Kühlraum gewährleistet. Die Einhausung bzw. der abgegrenzte Raum ist somit als Kühlkammer mit Trockeneis zur Kühlung des Materialstrangs ausgebildet. Ein weiterer Vorteil ist in der Reinigung des Materialstrangs bei Oberflächenkontakt mit dem Trockeneis zu finden.

Zudem kann das flüssige Medium von einer Speichereinheit über Verbindungsleitungen in definierten Mengen pro Zeit in die Einhausung bringbar sein. Die Einbringung in definierten Mengen pro Zeit - d.h. in definiertem Volumenstrom - kann bspw. über eine Steuereinheit geregelt werden. Auch können Ventile an den Verbindungseinleitungen angeordnet sein die, je nach Bedarf an definierter Menge von kühlendem Medium pro Zeit, geöffnet, und/oder teilweise geöffnet und/oder geschlossen werden können. Die Speichereinheit ist als Kohlendioxid-Speicher ausgebildet. Auch kann der erhitzte Materialstrang in einer definierten Vorschub- oder Bewegungsgeschwindigkeit durch den abgegrenzten Raum oder die Einhausung bewegbar sein. Hierbei kann eine Steuereinheit vorhanden sein, wobei durch die Steuereinheit ein Sollwert für die definierten Mengen pro Zeit in Abhängigkeit von der definierten Bewegungsgeschwindigkeit bestimmbar ist. Es ist denkbar, dass die Steuereinheit mit Eingabemitteln in Verbindung gebracht ist, durch welche mittels einer Bedienperson beispielsweise Angaben zum Material des zu kühlenden Stranges und/oder zur Temperatur des zu kühlenden Stranges und/oder weitere Angaben an die Steuereinheit weitergebbar sind. Die Steuereinheit kann hierauf beispielsweise aufgrund von auf der Steuereinheit abgelegten Algorithmen derart ausgestaltet sein, dass Sie eine Anpassung der Bewegungsgeschwindigkeit und/oder der definierten Mengen des kühlenden Mediums pro Zeit in Abhängigkeit von den übermittelten Angaben vornimmt.

Weiterhin kann an der mindestens einen Öffnung und/oder dem mindestens einen Durchbruch mindestens eine Düse zur Einbringung des kühlenden Mediums angeordnet sein. In einer bevorzugten Ausführungsform umfasst die Vorrichtung zwei oder mehrere Öffnungen und/oder Durchbrüche wobei zwei oder mehreren Öffnungen und/oder Durchbrüchen mindestens jeweils eine Düse zur Einbringung eines kühlenden Mediums in die Einhausung zugeordnet ist. Beispielsweise können die Düsen nebeneinander und parallel zu einer Bewegungsrichtung des Materialstrangs angeordnet sein.

Um ein Entweichen des kühlenden Mediums zu verhindern, kann die Einhausung oder der abgegrenzte Raum derart ausgebildet oder geformt sein, dass sie während der Bewegung des Materialstrangs in die Einhausung zumindest abschnittsweise vollständig um den Materialstrang angeordnet ist. Beispielsweise kann die Einhausung rohrförmig und/oder profilförmig ausgebildet sein.

Auch kann eine Bewegungsrichtung des Materialstrangs konzentrisch bzw. äquidistant zu den Wandungen der Einhausung angeordnet sein. Hierbei ist vorstellbar, dass der Materialstrang während seiner Kühlung nicht mit der Wandung in Oberflächenkontakt gebracht ist.

Zur Erreichung der oben genannten Ziele schlägt die Erfindung weiterhin ein Verfahren zur Kühlung eines erhitzten Materialstrangs vor, bei dem der Materialstrang über eine Zugangsöffnung in einen abgegrenzten Raum eingebracht und innerhalb des Raumes mit Kühlmittel beaufschlagt wird. Das Kühlmittel wird über wenigstens eine Einleitungsstelle oder -mündung in den abgegrenzten Raum eingebracht. So kann bspw. vorgesehen sein, dass der erhitzte Materialstrang zur Kühlung über die Zugangsöffnung in den abgegrenzten Raum eingebracht, dort mit Kühlmittel beaufschlagt und entlang einer unveränderten Bewegungsrichtung über eine Ausgangsöffnung wieder aus dem abgegrenzten Raum entnommen wird. Die Vorschub- oder Fördergeschwindigkeit des Materialstanges und die Menge bzw. der Volumenstrom des Kühlmittels, das innerhalb des abgegrenzten Raumes bzw. der Kühlkammer auf den Materialstrang aufgebracht wird, richten sich nach den Erfordernissen, insbesondere nach den Temperaturen des erhitzten Materialstranges und dem gewünschten Temperaturgefälle nach Passieren der Kühlkammer bzw. des abgegrenzten Raumes. Weiterhin kann vorgesehen sein, dass die Bewegungsrichtung des Materialstrangs ungefähr äquidistant zumindest zu gegenüber liegenden Wandungen des abgegrenzten Raumes verläuft. Wahlweise kann der Materialstang auch ungefähr mittig durch den abgegrenzten Raum oder die Kühlkammer befördert werden.

Als kühlendes Medium wird gemäß der Erfindung verflüssigtes und/oder gasförmiges Kohlendioxid eingesetzt. Der Vorteil des bspw. als Trockeneis einsetzbaren Kohlendioxids liegt an seiner rückstandsfreien Verdampfung nach dem Kühlvorgang, so dass bei teilweise kristallinem, d.h. in festem Aggregatzustand vorliegendem Kohlendioxid bzw. Trockeneis eine hervorragende Reinigungswirkung für die Oberflächen des Materialstanges erzielt werden kann. Ohne dass das Kohlendioxid oder Trockeneis abrasiv auf die Material- oder Oberflächenstruktur des Materialstranges wirkt, sorgt es doch für einen Materialabtrag, so dass anhaftende Verunreinigungen, Zunder, Ölrückstände von eventuellen Stanz- oder Umformprozessschritten etc. abgetragen und rückstandsfrei entfernt werden.

Das kühlende Medium oder das Kohlendioxid wird von einer Speichereinheit über Verbindungsleitungen in definiertem oder steuerbarem Volumenstrom in den abgegrenzten Raum eingebracht. Die Speichereinheit kann bspw. ein außerhalb eines Gebäudes liegender Tank sein, der auf diese Weise problemlos in zyklischen Abständen neu befüllt werden kann. Die Verbindungsleitungen können durch die Wände des Gebäudes in die Umgebung der Kühlkammer und schließlich in diese Kühlkammer geführt werden.

Ergänzend soll an dieser Stelle darauf hingewiesen werden, dass der Materialstrang keineswegs durch ein metallisches Bauteil gebildet sein muss. Das Verfahren eignet sich ebenso für andere Materialien, bspw. für Kunststoffschweißen, bei denen der Materialstang aus Kunststoff nach dem Fügen oder Schweißen mittels der erfindungsgemäßen Vorrichtung bzw. mit dem oben beschriebenen Verfahren gekühlt werden kann.

Ein besonderer Vorteil des eingesetzten und aufgrund des Einsatzes innerhalb des abgegrenzten Raumes sehr sparsam einzusetzenden Kühlmediums - bspw. flüssiges und/oder kristallines Kohlendioxid bzw. Trockeneis o. dgl. - liegt darin, dass völlig auf andere flüssige Kühlmedien wie Wasser oder Öl-Wasser-Emulsionen o. dgl. verzichtet werden kann, die nach dem Abkühlen des Bauteils oder Strangmaterials einen nicht unerheblichen Reinigungsaufwand erfordern. Da diese Reinigung oftmals unter Einsatz von Druckluft erfolgt, entstehen hohe Geräuschbelastungen von teilweise mehr als 90 Dezibel, die beim erfindungsgemäßen Verfahren weitgehend minimiert werden, da nach den Verfahrensschritten ein sehr sauberer Materialstrang bzw. ein hervorragend gereinigtes Bauteil zur Verfügung steht, das keiner weiteren Reinigung mehr bedarf. Das Verfahren ist somit sehr leise und damit anwenderfreundlich, erspart zudem eine große Menge an Reinigungsflüssigkeit bzw. Wasser, an elektrischer Energie sowie den Energieaufwand für die Zurverfügungstellung der Druckluft.

Auch die Maßhaltigkeit der Bauteile kann durch den Einsatz der erfindungsgemäßen Kühlvorrichtung sowie durch das erfindungsgemäße Verfahren verbessert werden, da die Kühlung des Materialstranges bzw. der erhitzten Bauteile unmittelbar nach ihrer Erwärmung erfolgt, so dass kein nennenswerter Wärmeverzug durch ungleichmäßiges Abkühlen auftritt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine sehr schematische Darstellung der wesentlichen Komponenten der erfindungsgemäßen Vorrichtung bzw. der wesentlichen Verfahrensschritte.
Fig. 2 zeigt eine schematische Ansicht einer Ausführungsvariante einer erfindungsgemäßen Vorrichtung
Fig. 3 zeigt eine schematische Ansicht eines Querschnitts einer Ausführungsform der erfindungsgemäßen Vorrichtung durch die Ebene E aus Fig. 2.
Fig. 4 zeigt beispielhaft mehrere Querschnitte verschiedener Ausführungsformen eines Materialstrangs, wie er in der vorliegenden Erfindung Verwendung finden kann.

Für gleiche oder gleich wirkende Elemente der Erfindung werden identische Bezugszeichen verwendet. Ferner werden der Übersicht halber nur Bezugszeichen in den Figuren verwendet, wo sie zum besseren Verständnis der Darstellung beitragen.

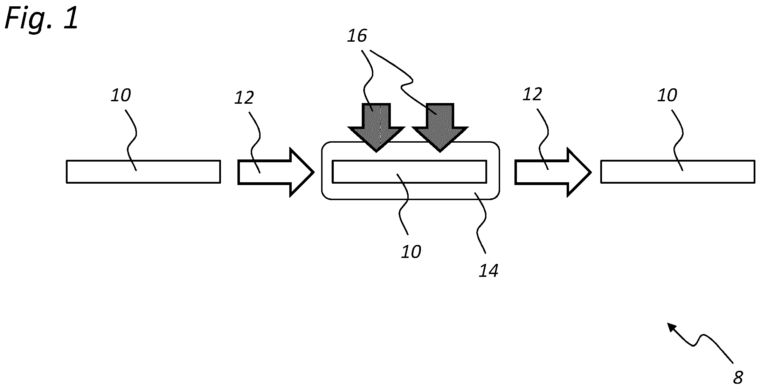

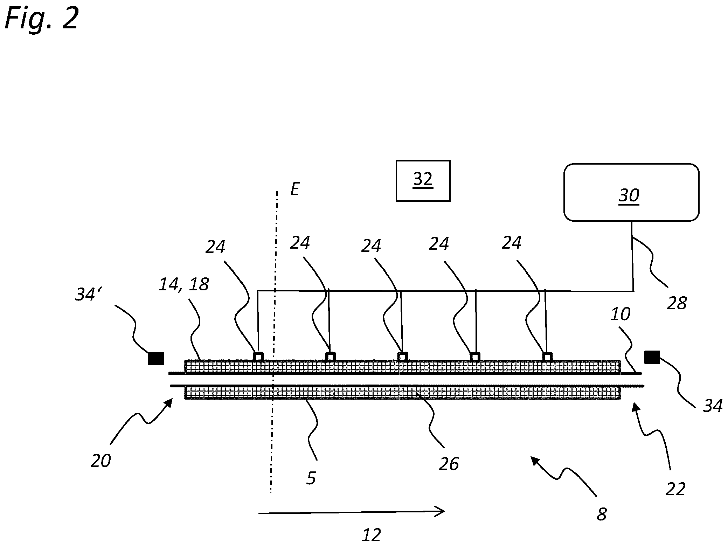

Die stark vereinfachte schematische Darstellung der Fig. 1 zeigt die wesentlichen Komponenten der erfindungsgemäßen Vorrichtung 8 bzw. die für die Erfindung wesentlichen Verfahrensschritte. So wird hier das erfindungsgemäße Verfahren zur Kühlung eines erhitzten Materialstrangs 10 verdeutlicht, bei dem dieser Materialstrang 10 in Förder- oder Vorschubrichtung 12 über eine Zugangsöffnung in einen abgegrenzten Raum 14 eingebracht und innerhalb des Raumes 14 mit Kühlmittel 16 beaufschlagt wird. Das Kühlmittel 16 wird über wenigstens eine Einleitungsstelle oder -mündung in den abgegrenzten Raum 14 eingebracht. Bei dem Verfahren wird der erhitzte Materialstrang 10 zur Kühlung über die Zugangsöffnung in den abgegrenzten Raum 14 eingebracht, dort mit dem Kühlmittel 16 beaufschlagt und entlang einer unveränderten Bewegungsrichtung 12 über eine Ausgangsöffnung wieder aus dem abgegrenzten Raum 14 entnommen oder heraus befördert. Wie anhand der Fig. 2 näher erläutert, kann das kühlende Medium 16 bspw. durch verflüssigtes und/oder gasförmiges Kohlendioxid oder durch sog. Trockeneis gebildet sein. Vorzugsweise wird der erhitzte Materialstrang 10 in einer definierten Bewegungsgeschwindigkeit durch den abgegrenzten Raum 14 hindurch bewegt, wobei die Bewegungsachse des Materialstrangs 10 wahlweise ungefähr äquidistant zu den Wandungen des abgegrenzten Raumes 14 verlaufen kann.

Die schematische Ansicht der Fig. 2 zeigt weiterhin eine Ausführungsvariante einer erfindungsgemäßen Vorrichtung 8 zur Kühlung eines erhitzten Materialstrangs 10. Die Vorrichtung 8 verfügt über den abgegrenzten Raum 14, der als Einhausung 18 mit einer Zuführöffnung oder einem Eingang 20 und einem Ausgang 22 ausgebildet sein kann. Der Materialstrang 10 wird hierbei in Bewegungs-, Förder- oder Vorschubrichtung 12 vom Eingang 20 über den Ausgang 22 durch den abgegrenzten Raum 14 bzw. die Einhausung 18 bewegt. Über die Düsen 24 wird Kohlendioxid als Kühlmittel 16 in die Einhausung 18 eingebracht, welches nach Änderung seines Aggregatszustandes als Trockeneis 26 zwischen der Wandung der Einhausung 18 und dem Materialstrang 10 angeordnet ist und diesen Raum weitgehend ausfüllt.

Die Düsen 24 sind über eine Leitung 28 mit einem Kohlendioxid-Speicher 30 verbunden. Ferner ist schematisch eine Steuereinheit 32 dargestellt, welche zur Bestimmung eines Sollwerts für einen Volumenstrom an bzw. eine definierte Menge an Kohlendioxid, welche in die Einhausung 18 eingebracht werden soll, vorgesehen ist. Die Steuereinheit 32 kann weiter für die Ansteuerung der Düsen 24 und/oder von Ventilen (nicht dargestellt) sowie für die Steuerung der Bewegung des Materialstrangs 10 vorgesehen sein. Weiter stehen Temperatursensoren 34 und 34', welche am Eingang 20 und am Ausgang 22 der Einhausung 18 angeordnet sind, zur Übermittelung der Ist-Temperatur des Materialstrangs 10 mit der Steuereinheit 32 in Verbindung.

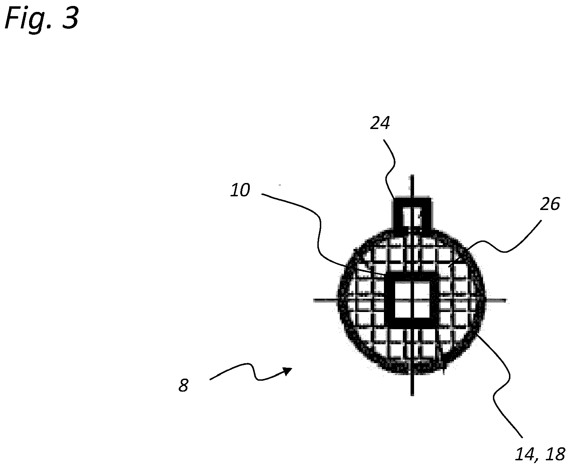

Die schematische Darstellung der Fig. 3 zeigt einen Querschnitt der erfindungsgemäßen Vorrichtung 8 durch die Ebene E aus Fig. 2. Der Materialstrang 10 ist hierbei ohne Oberflächenkontakt zur Gehäusewandung der Einhausung 18 durch die Einhausung 18 geführt. Zwischen der Gehäusewandung des abgegrenzten Raumes 14 bzw. der Einhausung 18 und dem Materialstrang 10 befindet sich das Trockeneis 26. Der Materialstrang 10 ist dabei ungefähr äquidistant zu den Wandungen bzw. konzentrisch zur Einhausung 18 angeordnet und geführt. Die Düse 24 ist auf einer Achse angeordnet, welche sich lotrecht zur Bewegungsrichtung 12 (vgl. Fig. 1 und Fig. 2) des Materialstrangs 10 erstreckt.

Wahlweise kann anstelle der in Fig. 2 und Fig. 3 angedeuteten Anordnungen von einzelnen, in Reihe entlang der Einhausung 18 platzierten Düsen 24 auch eine Spaltdüse (nicht dargestellt) mit länglicher Austrittsöffnung für das Kühlmedium oder das Trockeneis 26 zum Einsatz kommen. Gemäß alternativen, hier nicht dargestellten Ausführungsvarianten können auch andere Düsenbauformen verwendet werden, bspw. Ringdüsen oder versetzt über den Umfang der Einhausung 18 oder des abgegrenzten Raumes 14 verteilt angeordnete Einzeldüsen 24 o. dgl. Bei der Kühlung von Rundrohren, die den zu kühlenden Materialstrang 10 bilden, kann es bspw. sinnvoll sein, diese Rohre allseitig gleichmäßig mit Kühlmittel oder Trockeneis 26 beaufschlagen zu können, um auf diese Weise eine gleichmäßige Abkühlung des Materialstranges 10 zu erreichen.

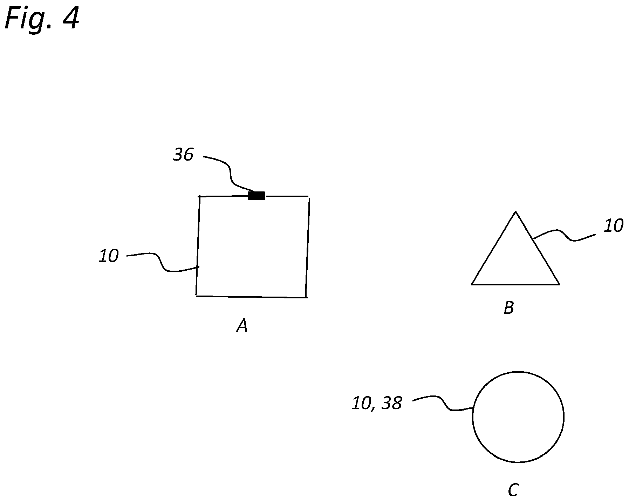

Die Darstellung der Fig. 4 zeigt beispielhaft mehrere Querschnitte A, B und C mehrerer Ausführungsformen eines Materialstrangs 10, wie er in der vorliegenden Erfindung Verwendung finden kann. Wie das Ausführungsbeispiel A zeigt, kann der Materialstrang 10 vor der Kühlung geschweißt worden sein und aus diesen Gründen eine oder mehrere Schweißnähte 36 aufweisen. Abgesehen von den in den Ausführungsbeispielen A und B gezeigten Mehrkantprofilen bzw. Mehrkantsträngen kann der Materialstrang 10 auch einen runden Querschnitt aufweisen und somit als Rohr 38 ausgebildet sein. Die Ausführungen A bis C sollen leidglich Beispiele darstellen. Hiervon abgesehen können zahlreiche weitere geometrische Formgebungen zur Ausgestaltung des Materialstrangs 10 im Rahmen der vorliegenden Erfindung Verwendung finden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 8: Vorrichtung
- 10: Materialstrang, erhitzter Materialstrang
- 12: Förder-/Vorschubrichtung
- 14: abgegrenzter Raum
- 16: Kühlmittel
- 18: Einhausung
- 20: Eingang
- 22: Ausgang
- 24: Düse
- 26: Trockeneis
- 28: Leitung
- 30: Kohlendioxid-Speicher
- 32: Steuereinheit
- 34: Temperatursensor (auch 34')
- 36: Schweißnaht
- 38: Rohr
- E: Ebene

## Patentansprüche

1. Vorrichtung (1) zur Kühlung eines erhitzten Materialstrangs (10) innerhalb eines als Bestandteil der Vorrichtung (1) ausgebildeten abgegrenzten Raumes (14), der über wenigstens eine Zugangsöffnung zur Zuführung des zu kühlenden erhitzten Materialstrangs (10) und/oder zu dessen Entnahme nach einem Kühlvorgang sowie über wenigstens eine Einleitungsstelle oder -mündung zur Zuführung und/oder Einbringung eines zu kühlenden Mediums in den abgegrenzten Raum (14) verfügt, wobei der abgegrenzte Raum (14) durch eine Einhausung (18) gebildet ist, **dadurch gekennzeichnet, dass**
- die Vorrichtung (1) eine als Kohlendioxid-Speicher ausgebildete Speichereinheit (30) sowie Verbindungsleitungen (28) umfasst, wobei das zu kühlende und durch verflüssigtes und/oder gasförmiges Kohlendioxid ausgebildete Medium über die Verbindungsleitungen (28) und die Einleitungsstelle oder-mündung von der Speichereinheit (30) in definierten Mengen pro Zeit in die Einhausung (18) bringbar ist, so dass das flüssige und/oder gasförmige Kohlendioxid nach dem Einbringen in die Einhausung (18) eine Änderung seines Aggregatszustandes erfährt und vorzugsweise als Trockeneis ausgebildet ist.

2. Vorrichtung nach Anspruch 1, bei welcher der abgegrenzte Raum (14) wenigstens eine Zugangsöffnung für den zu kühlenden Materialstrang (10) und wenigstens eine Ausgangsöffnung zur Entnahme des gekühlten Materialstranges (10) aufweist.

3. Vorrichtung nach Anspruch 1 oder Anspruch 2, bei der die wenigstens eine Einleitungsstelle für das kühlende Medium durch eine oder mehrere Düsen (24) an einem Wandbereich und/oder im Innenraum des abgegrenzten Raumes (14) und/oder in Nähe einer Bearbeitungsstelle für den Materialstrang (10) gebildet ist.

4. Vorrichtung nach Anspruch 3, bei der zumindest eine der Einleitungsstellen oder Düsen (24) nebeneinander und parallel zu einer Bewegungsrichtung (BR) des Materialstrangs (10) angeordnet ist.

5. Vorrichtung nach Anspruch 3, bei der zumindest eine der Einleitungsstellen oder Düsen (24) am Umfang des abgegrenzten Raumes (14) und/oder parallel zur Bewegungsrichtung (BR) des Materialstrangs (10) angeordnet ist.

6. Vorrichtung nach einem der Ansprüche 1 bis 5, bei welcher die Vorrichtung eine Steuereinheit (S) zur Steuerung eines Volumenstroms an Kühlmittel, einer Vorschubgeschwindigkeit des Materialstrangs (10) und/oder weiterer Faktoren aufweist.

7. Verfahren zur Kühlung eines erhitzten Materialstrangs (10), bei dem dieser über eine Zugangsöffnung in einen abgegrenzten Raum (14) eingebracht und innerhalb des Raumes (14) mit Kühlmittel beaufschlagt wird, das über wenigstens eine Einleitungsstelle oder -mündung in den abgegrenzten Raum (14) eingebracht wird **dadurch gekennzeichnet, dass** das kühlende Medium zumindest teilweise durch verflüssigtes und/oder gasförmiges Kohlendioxid gebildet wird und nach Einbringen in den abgegrenzten Raum (14) eine Änderung seines Aggregatszustandes erfährt und hierbei vorzugsweise als Trockeneis ausgebildet wird.

8. Verfahren nach Anspruch 7, bei dem der erhitzte Materialstrang (10) zur Kühlung über die Zugangsöffnung in den abgegrenzten Raum (14) eingebracht, dort mit Kühlmittel beaufschlagt und entlang einer unveränderten Bewegungsrichtung über eine Ausgangsöffnung wieder aus dem abgegrenzten Raum (14) entnommen wird.

9. Verfahren nach Anspruch 7 oder 8, bei dem der erhitzte Materialstrang (10) in einer definierten Bewegungsgeschwindigkeit durch den abgegrenzten Raum (14) bewegt wird.

10. Verfahren nach einem der Ansprüche 7 bis 9, bei dem die Bewegungsrichtung (BR) des Materialstrangs (10) ungefähr äquidistant zu Wandungen des abgegrenzten Raumes (14) verläuft.

## Claims

1. A device (1) for cooling a heated material strand (10) within an enclosed space (14) formed as a component of the device (1), the enclosed space (14) having at least one inlet opening for supplying the heated material strand (10) to be cooled and/or for removing it after a cooling process; and having at least one infeed point or infeed opening for supplying and/or bringing a cooling medium into the enclosed space (14), wherein the enclosed space (14) is formed by an enclosure (18), **characterised in that**
- the device (1) comprises a storage unit (30) formed as carbon dioxide storage and comprises connecting lines (28), wherein the cooling medium formed by liquefied and/or gaseous carbon dioxide is bringable from the storage unit (30) into the enclosure (18) in defined quantities per time by way of the connecting lines (28) and the infeed point or infeed opening such that the liquid and/or gaseous carbon dioxide undergoes a change of its state of aggregation after being brought into the enclosure (18) and preferably forms dry ice.

2. The device as recited in claim 1, in which the enclosed space (14) has at least one inlet opening for the material strand (10) to be cooled and at least one outlet opening for removing the cooled material strand (10).

3. The device as recited in claim 1 or claim 2, in which the at least one infeed point for the cooling medium is formed by one or more nozzles (24) at a wall area and/or in the interior of the enclosed space (14) and/or near a processing point for the material strand (10).

4. The device as recited in claim 3, in which at least one of the infeed points or nozzles (24) is disposed side by side and parallel to a direction of movement (BR) of the material strand (10).

5. The device as recited in claim 3, in which at least one of the infeed points or nozzles (24) is disposed at the perimeter of the enclosed space (14) and/or parallel to a direction of movement (BR) of the material strand (10).

6. The device as recited in one of the claims 1 to 5, in which the device has a control unit (S) for controlling a volume flow of cooling agent, a feed speed of the material strand (10), and/or further factors.

7. A method for cooling a heated material strand (10), in which method said material strand (10) is brought into an enclosed space (14) by way of an inlet opening and is impinged with cooling agent within the space (14), the cooling agent being brought into the enclosed space (14) by way of at least one infeed point or infeed opening, **characterised in that** the cooling medium is at least partly formed by liquefied and/or gaseous carbon dioxide and undergoes a change of its state of aggregation after being brought into the enclosed space (14) and, in the process, preferably forms dry ice.

8. The method as recited in claim 7, in which the heated material strand (10) is brought into the enclosed space (14) by way of an inlet opening for the purpose of cooling, is impinged with cooling agent there, and is removed from the enclosed space (14) along an unchanged direction of movement by way of an outlet opening.

9. The method as recited in claim 7 or 8, in which the heated material strand (10) is moved through the enclosed space (14) at a defined speed of movement.

10. The method as recited in one of the claims 7 to 9, in which the direction of movement (BR) of the material strand (10) runs about equidistant to walls of the enclosed space (14).

## Revendications

1. Dispositif (1) destiné à refroidir un tronçon de matière (10) chaud au sein d'un espace (14) délimité agencé en tant que partie constitutive du dispositif (1) qui dispose d'au moins une ouverture d'accès pour amener le tronçon de matière (10) chaud à refroidir et/ou le retirer à la suite d'une opération de refroidissement ainsi qu'au moins un point ou une embouchure d'alimentation pour amener et/ou injecter un substrat de refroidissement dans l'espace (14) délimité, ledit espace délimité (14) étant formé par un encoffrage (18),
**caractérisé en ce que**
- le dispositif (1) comprend une unité de stockage (30) agencée en tant que réservoir de dioxyde de carbone, ainsi que des conduits de liaison (28), le substrat de refroidissement, formé par du dioxyde de carbone liquéfié et/ou sous forme gazeuse, pouvant être amené par l'unité de stockage (30) par le biais des conduits de liaison (28) et du point ou de l'embouchure d'alimentation en quantités définies par temps dans l'encoffrage (18) de telle sorte que le dioxyde de carbone liquide ou sous forme gazeuse subit, après avoir été injecté dans l'encoffrage (18), un changement de son état physique et est agencé de préférence sous forme de glace sèche.

2. Dispositif selon la revendication 1, dans lequel l'espace délimité (14) présente au moins une ouverture d'accès pour le tronçon de matière (10) à refroidir et au moins une ouverture de sortie pour retirer ledit tronçon de matière (10) refroidi.

3. Dispositif selon la revendication 1 ou la revendication 2, dans lequel le(s) point(s) d'alimentation du substrat de refroidissement est/sont formé(s) par une ou plusieurs buses (24) à une zone de paroi et/ou à l'intérieur de l'espace (14) délimité et/ou à proximité d'un point de transformation du tronçon de matière (10).

4. Dispositif selon la revendication 3, dans lequel au moins un des points d'alimentation ou une des buses (24) sont disposés l'un à côté de l'autre et parallèlement à un sens de déplacement (BR) du tronçon de matière (10).

5. Dispositif selon la revendication 3, dans lequel au moins un des points d'alimentation ou une des buses (24) sont disposés sur le pourtour de l'espace (14) délimité et/ou parallèlement au sens de déplacement (BR) du tronçon de matière (10).

6. Dispositif selon l'une quelconque des revendications 1 à 5, dans lequel ledit dispositif présente une unité de commande (S) pour commander un débit volumique d'agent réfrigérant, une vitesse d'amenage du tronçon de matière (10) et/ou d'autres facteurs.

7. Procédé pour refroidir un tronçon de matière (10) chaude, dans lequel celui-ci est amené par une ouverture d'accès dans un espace (14) délimité et auquel est appliqué un agent réfrigérant à l'intérieur dudit espace (14), lequel est amené par au moins un point ou une embouchure d'alimentation dans ledit espace (14) délimité, **caractérisé en ce que** le substrat de refroidissement est formé au moins partiellement par du dioxyde de carbone liquéfié et/ou sous forme gazeuse et subit, après avoir été amené dans l'espace (14) délimité, un changement de son état physique et est agencé à cet égard de préférence sous forme de glace sèche.

8. Procédé selon la revendication 7, dans lequel le tronçon de matière (10) chaud est amené dans l'espace (14) délimité par l'ouverture d'accès pour être refroidi, pour s'y voir appliquer un agent réfrigérant et être retiré à nouveau dudit espace (14) délimité, le long d'un sens de déplacement non modifié, par une ouverture de sortie.

9. Procédé selon la revendication 7 ou 8, dans lequel le tronçon de matière (10) chaud est déplacé à travers l'espace (14) délimité à une vitesse de déplacement définie.

10. Procédé selon l'une quelconque des revendications 7 à 9, dans lequel le sens de déplacement (BR) du tronçon de matière (10) est environ équidistant des parois de l'espace (14) délimité.
